(19) Europäisches Patentamt
European Patent Office
Office européen des brevets

(11) **EP 4 414 342 A1**

(12) **DEMANDE DE BREVET EUROPEEN**

(43) Date de publication:
**14.08.2024 Bulletin 2024/33**

(21) Numéro de dépôt: **24152103.8**

(22) Date de dépôt: **16.01.2024**

(51) Classification Internationale des Brevets (IPC):
**C04B 35/48** (2006.01)  **C04B 35/486** (2006.01)
**C04B 35/488** (2006.01)  **C04B 35/638** (2006.01)
**C04B 35/64** (2006.01)

(52) Classification Coopérative des Brevets (CPC):
**C04B 35/48; C04B 35/486; C04B 35/488;**
**C04B 35/4885; C04B 35/638; C04B 35/64;**
C04B 2235/3206; C04B 2235/3208;
C04B 2235/3217; C04B 2235/3224;
C04B 2235/3225; C04B 2235/3229;
C04B 2235/3232; C04B 2235/3239;
C04B 2235/3241;          (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **07.02.2023 EP 23155438**

(71) Demandeur: **The Swatch Group Research and
Development Ltd
2074 Marin (CH)**

(72) Inventeurs:
- **FORNABAIO, Marta
1023 Crissier (CH)**
- **TABARD, Lucie
2000 Neuchâtel (CH)**
- **ACTIS-DATTA, Arnaud
2854 Bassecourt (CH)**

(74) Mandataire: **ICB SA
Faubourg de l'Hôpital, 3
2001 Neuchâtel (CH)**

(54) **ARTICLE DE COULEUR ET SON PROCEDE DE FABRICATION**

(57) L'invention concerne un article de couleur réalisé dans une céramique comprenant :
- une zircone dite haute performance avec un pourcentage en poids compris 80% et 99.5% par rapport au poids total de la céramique,
- des pigments avec un pourcentage en poids compris entre 2.5% et 20% par rapport au poids total de la céramique, lesdits pigments comprenant un ou plusieurs oxydes choisis parmi la liste constituée des oxydes de Al, Si, Fe, Cu, Co, Ni, Mn, Zn, Cr, Ce, V, Nd, Pr et Ti incluant des oxydes mixtes de cette liste,
le pourcentage total en poids de la zircone haute performance, des pigments et des impuretés éventuelles étant de 100%, ladite céramique ayant une dureté HV30 supérieure à 1100 HV et une ténacité supérieure à 12 MPa-Vm.
La présente invention concerne également le procédé de fabrication de cet article.

Fig. 1

(52) Classification Coopérative des Brevets (CPC):
(Cont.)
C04B 2235/3262; C04B 2235/3272;
C04B 2235/3275; C04B 2235/3279;
C04B 2235/3281; C04B 2235/3284;
C04B 2235/3418; C04B 2235/6567;
C04B 2235/658; C04B 2235/6581;
C04B 2235/662; C04B 2235/72; C04B 2235/96;
C04B 2235/9661

**Description**

Domaine technique de l'invention

La présente invention se rapporte à un article de couleur et notamment à un composant horloger d'habillage ou du mouvement réalisé dans un matériau à base de zircone. Elle se rapporte également au procédé de fabrication dudit article.

Arrière-plan technologique

Les céramiques sont couramment utilisées dans le domaine horloger, en particulier pour des composants d'habillage, pour leur dureté élevée qui permet de garantir leur aptitude à ne pas se rayer. En corollaire, la ténacité a tendance à être plus modérée avec typiquement des valeurs n'excédant pas 6 ou 7 MPa√m. Ces valeurs peuvent s'avérer faibles pour certains composants nécessitant une ténacité plus importante. En effet, la ténacité peut être corrélée avec la résistance des pièces, une haute ténacité se traduisant par une probabilité moindre de casse des pièces. On peut donc s'attendre à ce qu'une ténacité plus élevée permette de réduire les rebuts de production et d'usiner plus facilement les pièces. Dans le cas des composants d'habillage, cela permettrait d'usiner des cadrans de faible épaisseur sans risque de les fracturer.

Les céramiques utilisées pour des articles décoratifs doivent également répondre à des critères esthétiques. De base, les céramiques avec une matrice en zircone ont une couleur blanchâtre translucide qui n'offre pas un rendu extraordinaire. Il est usuel de les colorer avec des pigments pour améliorer leur aspect esthétique. Cependant, les couleurs obtenues sont souvent pâles et/ou non homogènes.

Résumé de l'invention

La présente invention a pour objet de pallier aux inconvénients précités en proposant une nouvelle composition de céramique à base de zircone qui permet de fabriquer un article présentant une dureté élevée combinée à une ténacité élevée tout en ayant une couleur intense et homogène dans le volume de l'article.

A cet effet, la présente invention propose d'utiliser des zircones dites hautes performances, la terminologie « hautes performances » faisant référence à leurs dureté et ténacité élevées, et de les colorer avec des pigments ou des mélanges de pigments dans des pourcentages bien particuliers pour obtenir cette couleur homogène et intense.

Plus précisément, la présente invention se rapporte à un article de couleur réalisé dans une céramique comprenant :

- une zircone dite haute performance avec un pourcentage en poids compris entre 80% et 99.5% par rapport au poids total de la céramique, la zircone haute performance étant choisie parmi une ou plusieurs des zircones suivantes :

- une zircone dopée avec un oxyde d'yttrium, le pourcentage molaire de l'oxyde d'yttrium par rapport à la zircone étant inférieur à 2.7%,

- une zircone co-dopée avec un oxyde de cérium et un oxyde d'yttrium, le pourcentage molaire total de l'oxyde de cérium avec l'oxyde d'yttrium par rapport à la zircone étant compris entre 1 et 12%,

- une zircone co-dopée avec un oxyde d'hafnium et un oxyde d'yttrium, le pourcentage molaire total de l'oxyde d'hafnium avec l'oxyde d'yttrium par rapport à la zircone étant compris entre 4 et 8%,

- une zircone dopée avec un ou plusieurs oxydes choisis parmi un oxyde d'yttrium, un oxyde de cérium, un oxyde de magnésium et un oxyde de calcium, et renforcée avec une alumine, le pourcentage en poids de l'alumine par rapport à la zircone dopée étant compris entre 8 et 18%,

- des pigments avec un pourcentage en poids compris entre 2.5% et 20% par rapport au poids total de la céramique, lesdits pigments comprenant un ou plusieurs oxydes choisis parmi la liste constituée des oxydes de Al, Si, Fe, Cu, Co, Ni, Mn, Zn, Cr, Ti, V, Ce, Pr et Nd incluant des oxydes mixtes de cette liste,

- des impuretés éventuelles comprises entre 0 et 0.2%,

le pourcentage total en poids de la zircone haute performance, des pigments et des impuretés éventuelles étant de 100%, ladite céramique ayant une dureté HV30 supérieure à 1100 HV et une ténacité supérieure à 12 MPa√m.

Des cadrans ont été réalisés avec ces compositions de céramique. Les résultats ont montré que ces derniers présentent une couleur intense et parfaitement homogène sans halo ou tâche. Les couleurs obtenues sont respectivement des nuances de bleu, de noir et de blanc. Tous les échantillons ont des duretés supérieures à 1150 HV30 pour une ténacité supérieure ou égale à 12.5 MPa√m.

La présente invention se rapporte également au procédé de fabrication de l'article. Plus précisément, elle se rapporte au procédé de fabrication comprenant les étapes suivantes :

- Etape a) : Réalisation d'un mélange de base, aussi appelé premier mélange, avec la zircone haute performance et les pigments dans les teneurs précitées, et ce éventuellement en milieu liquide,

- Etape b) optionnelle : Réalisation d'un deuxième mélange comprenant le premier mélange et un système de liant organique,

- Etape c) si il y a l'étape b) : Granulation dudit deuxième mélange,

- Etape d) : Formation d'une ébauche ayant la forme de l'article,

- Etape e) : Déliantage de l'ébauche,

- Etape f) : Frittage de l'ébauche, de préférence sous air, à une température de maintien comprise entre 1200°C et 1600°C, de préférence entre 1250°C et 1450°C, pendant une période comprise entre 20 minutes et 20 heures, de préférence entre 1 heure et 3 heures.

Ce procédé basé sur la technologie des poudres avec un frittage conventionnel, est facilement industrialisable, ce qui est un avantage non négligeable.

D'autres caractéristiques et avantages de l'invention apparaîtront à la lecture de la description détaillée qui va suivre, en référence au dessin annexé.

Brève description de la figure

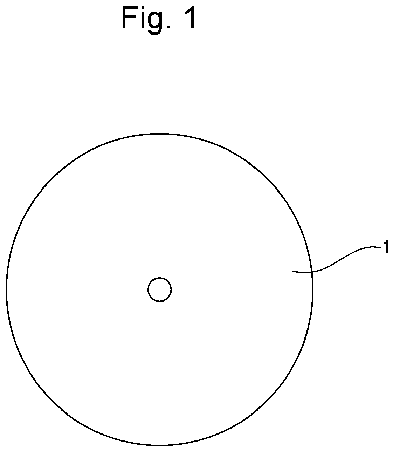

La figure 1 représente un cadran réalisé avec le matériau céramique selon l'invention.

Description détaillée de l'invention

La présente invention se rapporte à un article réalisé dans un matériau céramique à base de zircone. L'article peut être un article décoratif tel qu'un élément constitutif de montres, bijoux, bracelets, etc. ou plus généralement une partie externe d'un élément portable comme une coque d'un téléphone mobile. Dans le domaine horloger, cet article peut être un composant d'habillage tel qu'une carrure, un fond, une lunette, un poussoir, une couronne, un maillon de bracelet, un cadran, une aiguille, un index de cadran, etc. A titre illustratif, un cadran 1 réalisé avec le matériau céramique selon l'invention est représenté à la figure 1. Il peut également s'agir d'un composant du mouvement tel qu'une platine, un pont, une roue, un axe ou une masse oscillante.

L'article en céramique selon l'invention comporte une matrice d'oxyde de zirconium ($ZrO_2$), aussi appelé zircone, réalisée dans une zircone dite haute performance. On entend par haute performance, une des quatre zircones citées ci-après ou un mélange d'au moins deux des zircones citées ci-après. Il peut s'agir d'une zircone dopée avec une faible teneur d'oxyde d'yttrium ($Y_2O_3$), le pourcentage molaire de l'oxyde d'yttrium par rapport à la zircone étant inférieur à 2.7%. Il peut s'agir d'une zircone co-dopée avec un oxyde de cérium ($Ce_2O_3$) et un oxyde d'yttrium ($Y_2O_3$), le pourcentage molaire de l'oxyde de cérium avec l'oxyde d'yttrium par rapport à la zircone étant compris entre 1 et 12%. Il peut s'agir d'une zircone co-dopée avec un oxyde d'hafnium ($HfO_2$) et un oxyde d'yttrium ($Y_2O_3$), le pourcentage molaire de l'oxyde d'hafnium avec l'oxyde d'yttrium par rapport à la zircone étant compris entre 4 et 8%. Il peut s'agir d'une zircone renforcée avec de l'alumine, appelée en anglais ATZ pour « alumina toughened zirconia », avec un pourcentage en poids de l'alumine par rapport à la zircone compris entre 8 et 18%. Cette zircone renforcée avec de l'alumine est également dopée, ou en d'autres mots stabilisée, avec un ou plusieurs oxydes choisis parmi un oxyde d'yttrium, un oxyde de cérium, un oxyde de magnésium et un oxyde de calcium. De préférence, elle est dopée avec des oxydes de cérium et d'yttrium avec un pourcentage en poids par rapport à la zircone renforcée avec l'alumine compris entre 4 et 8%.

Selon l'invention, la zircone haute performance est présente avec une teneur en poids par rapport au poids total de la céramique comprise entre 80 et 99.5%, de préférence entre 80% et 97.5%, plus préférentiellement entre 88% et 97%, encore plus préférentiellement entre 89% et 96.5%. Selon l'invention, la céramique comprend en complément des pigments qui vont donner la couleur à la zircone haute performance. Ces pigments sont présents dans un pourcentage en poids compris entre 0.5% et 20%, de préférence entre 2.5% et 20%, plus préférentiellement entre 3% et 12%, encore plus préférentiellement entre 3.5% et 11 %. Les pigments sont choisis parmi les oxydes métalliques et/ou de terres rares. De préférence, il s'agit d'un ou plusieurs oxydes choisis parmi les oxydes d'Al, Si, Fe, Cu, Co, Ni, Mn, Zn, Cr, Ti, V, Ce, Nd et Pr incluant les oxydes mixtes tels que $CoAl_2O_4$. Eventuellement, la céramique peut comporter des impuretés avec un pourcentage en poids compris entre 0 et 0.2%.

De préférence, l'article est constitué de la zircone haute performance, des pigments et des impuretés éventuelles dans les proportions susmentionnées.

Le choix des pigments et de leur pourcentage est fonction de la couleur recherchée et de son intensité. Lorsque les couleurs bleues ou noires sont recherchées, les pigments comportent un ou plusieurs oxydes choisis parmi la liste constituée des oxydes de Al, Fe, Co, Cr, Ni et Mn incluant les oxydes mixtes avec un pourcentage total en poids compris entre 3 et 7%.

De préférence, pour la couleur noire, les pigments comprennent (sont constitués) des oxydes de Co, Fe et Cr incluant les oxydes mixtes avec un pourcentage total de pigments compris entre 3% et 6%, de préférence entre 3% et 5%, plus préférentiellement entre 3.5% et 4.5%. L'article en céramique de couleur noire a une couleur intense avec dans l'espace colorimétrique CIELAB (conforme aux normes CIE n°15, ISO 7724/1, DIN 5033 Teil 7, ASTM E-1164) une composante L* supérieure à 40, plus précisément comprise entre 42 et 50, le L étant une mesure de l'éclat du noir. Les composantes a* et b* sont quant à elles autour de 0 pour le noir. Avantageusement, la zircone haute performance utilisée est la zircone faiblement dopée avec l'oxyde d'yttrium car elle donne les meilleurs résultats d'un point de vue esthétique.

De préférence, pour la couleur bleue, les pigments comprennent (sont constitués) des oxydes de Co et Al incluant les oxydes mixtes avec un pourcentage total de pigments compris entre 3% et 7%, de préférence entre 3% et 6%, plus préférentiellement entre 3.5% et 5.5%. La couleur bleue est intense avec une composante L supérieure à 40, plus précisément comprise entre 42 et 55. Avantageusement, la zircone haute performance est la zircone dopée avec un ou plusieurs oxydes choisis parmi l'oxyde d'yttrium, l'oxyde de cérium, l'oxyde de magnésium et l'oxyde de calcium et renforcée avec l'alumine. Selon une autre variante avantageuse, la zircone haute performance est la zircone co-dopée avec l'oxyde d'hafnium et l'oxyde d'yttrium.

Lorsque la couleur verte est recherchée, le mélange est réalisé par ajout d'oxydes de Ni et Cr incluant les oxydes mixtes avec un pourcentage en poids compris entre 2.5% et 5%.

Lorsqu'une couleur blanche intense et opaque est recherchée, les pigments comportent des oxydes d'Al et/ou de Ti incluant les oxydes mixtes avec un pourcentage compris entre 5 et 20% en poids. De préférence, les pigments comprennent (sont constitués) de l'oxyde d'Al avec un pourcentage en poids compris entre 6% et 14%, de préférence entre 8% et 12%, plus préférentiellement entre 9% et 11%. Avantageusement, la zircone haute performance est la zircone faiblement dopée avec l'oxyde d'yttrium. On notera que l'ajout d'oxyde de cérium comme élément dopant ou co-dopant est préférablement évité pour la couleur blanche, l'oxyde de cérium apportant un ton jaunâtre devant être corrigé. L'article en céramique de couleur blanche a une composante L supérieure à 90, voire supérieure ou égale à 95. Les composantes a* et b* sont quant à elles autour de 0 pour le blanc.

L'article en céramique a une dureté HV, plus précisément HV30, supérieure à 1100, voire supérieure à 1150. Il a une ténacité $K_{iC}$ supérieure à 12 MPa√m, de préférence supérieure ou égale à 12.5 MPa√m, voire supérieure ou égale à 14 MPa√m. Typiquement, une ténacité comprise entre 12 MPa√m et 13 MPa√m est obtenue pour la zircone haute performance renforcée avec de l'alumine tandis qu'une ténacité comprise entre 13.5 MPa√m et 16 MPa√m est obtenue pour la zircone haute performance faiblement dopée en oxyde d'yttrium et la zircone haute performance co-dopée avec l'oxyde d'yttrium et l'oxyde d'hafnium.

L'article est fabriqué par frittage avec le procédé consistant à:

- Etape a) : Réaliser le mélange de base, aussi appelé premier mélange, avec les différents composés précités, à savoir la zircone haute performance et les pigments, et ce éventuellement en milieu liquide. Lorsque le mélange est réalisé en milieu liquide, il est effectué à l'aide de dispersants, par ex. du Dolapix CE 64, et de billes de broyage, par ex. en alumine ou zircone. Le broyage est réalisé avec un attriteur ou un broyeur à boulet pendant un temps compris entre 15 minutes et 24 heures selon la composition. La qualité de la dispersion est vérifiée par granulométrie laser avec des valeurs visées de d90 inférieur à 0.9 $\mu$m, de préférence inférieur à 0.5 $\mu$m, plus préférentiellement inférieure à 0.2 $\mu$m.

- Etape b) optionnelle : Réaliser un deuxième mélange comprenant le premier mélange et un système de liant organique (paraffine, polyéthylène, polyvinyle acétate, etc.).

- Etape c) si il y a l'étape b) : Granuler et, le cas échéant, sécher ledit deuxième mélange, par exemple, dans un atomiseur. De préférence, les granulats ont une taille d50 comprise entre 10 et 100 $\mu$m, et, de préférence, entre 40 et 60 $\mu$m.

- Etape d) : Former une ébauche en conférant au premier mélange ou au deuxième mélange si il y a l'étape b) la forme de l'article désiré, par exemple, par injection ou pressage. L'ébauche peut également être réalisée par coulage, auquel cas, il n'y a pas les étapes b) et c).

- Etape e) : Délianter l'ébauche dans une gamme de températures comprise entre 400°C et 800°C, de préférence entre 550°C et 650°C, avec typiquement un temps de maintien compris entre 2 heures et 4 heures. Il pourrait également s'agir d'un déliantage solvant dans le cas d'une mise en forme par injection.
- Etape f) : Fritter l'ébauche, de préférence sous air, à une température de maintien comprise entre 1200°C et 1600°C, de préférence entre 1250°C et 1450°C, pendant une période comprise entre 20 minutes et 20 heures, de préférence entre 1 heure et 3 heures.

Selon la couleur recherchée, le frittage peut être suivi d'un traitement thermique sous vide ou sous atmosphère contrôlée, par exemple sous argon ou azote ou encore sous gaz réducteurs ou oxydants, à une température comprise entre 900°C et 1200°C avec un palier compris entre 20 minutes et 6 heures.

L'ébauche ainsi obtenue est refroidie. Elle peut ensuite être usinée, polie et décorée si nécessaire pour obtenir l'article désiré. La couleur étant présente dans la masse de l'ébauche, ces opérations de finition n'altèrent pas la couleur finale de l'article.

Des essais ont été réalisés pour les compositions reprises dans la table 1 ci-après avec des températures de frittage comprises entre 1300°C et 1500°C pour un temps de maintien de 2 heures. On précisera que les compositions peuvent comporter des impuretés incluses dans les composés de base (zircone haute performance et pigments) fournis. Les mesures de dureté sont des duretés HV30, c.à.d. réalisées sous une charge de 30 kg. La ténacité a été déterminée sur base des mesures des longueurs des fissures aux quatre extrémités des diagonales de l'empreinte de dureté selon la formule :

$$K_{1c} = 0.0319 \frac{P}{al^{1/2}}$$

avec $P$ qui est la charge appliquée (N), a qui est la demi-diagonale (m) et $l$ qui est la longueur de la fissure mesurée (m).

Les valeurs colorimétriques Lab ont été mesurées sur les échantillons polis avec un spectrophotomètre KONICA MINOLTA CM-3610A dans les conditions suivantes : mesures SCI (réflexion spéculaire incluse) et SCE (réflexion spéculaire exclue), inclinaison de 8°, zone de mesure SAV de 4 mm de diamètre.

Les échantillons obtenus ont une couleur noire, bleue ou blanche intense avec pour le bleu différentes nuances allant jusqu'au bleu foncé. Toutes les valeurs de dureté sont supérieures à 1190 HV30. Toutes les valeurs de ténacité sont supérieures ou égales à 12.5 MPa √m avec même des valeurs supérieures ou égales à 14 MPa √m pour les matrices de zircone avec une faible teneur en oxyde d'yttrium ou co-dopée avec de l'oxyde d'yttrium et de l'oxyde d'hafnium.

Table 1

| | Exemple A *Céramique Noire* | Exemple B *Céramique Bleue* | Exemple C *Céramique Bleue vive* | Exemple D *Céramique Bleue foncée* | Exemple E *Céramique Blanche* |
|---|---|---|---|---|---|
| **Composition** | | | | | |
| Matrice de zircone | $ZrO_2$ - < 2.7 % mol $Y_2O_3$ | A TZ (10 - 16 % pds $Al_2O_3$) | A TZ (10 - 16 % pds $Al_2O_3$) | $ZrO_2$ - 4 ~ 10% pds $Y_2O_3$ + $HfO_2$ | $ZrO_2$ - < 2.7 % mol $Y_2O_3$ |
| Pigment | 4 % pds oxydes (Co, Fe,Cr) | 4 % pds oxydes (Co, Al) | 5 % pds oxydes (Co,Al) | 4 % pds oxydes (Co,Al) | 10 % pds oxydes (Al) |
| Dureté (HV30) | 1197 | 1234 | 1245 | 1194 | 1286 |
| Ténacité (MPa√m) | 14.0 | 12.7 | 12.5 | 14.4 | 15.5 |
| Couleur L,a,b | L=45.00 a=-0.05 b=-0.9 | L=50.09 a=-4.02 b=-17.62 | L=50.7 a=0.4 b=-29.39 | L=45.95 a=-2.14 b=-3.23 | L=97.8 a=-0.3 b=1.07 |

**Revendications**

1.  Article de couleur réalisé dans une céramique comprenant :

    - une zircone dite haute performance avec un pourcentage en poids compris 80% et 99.5% par rapport au poids total de la céramique, la zircone haute performance étant choisie parmi une ou plusieurs des zircones suivantes :
    - une zircone dopée avec un oxyde d'yttrium, le pourcentage molaire de l'oxyde d'yttrium par rapport à la zircone étant inférieur à 2.7%,
    - une zircone co-dopée avec un oxyde de cérium et un oxyde d'yttrium, le pourcentage molaire total de l'oxyde de cérium avec l'oxyde d'yttrium par rapport à la zircone étant compris entre 1 et 12%,
    - une zircone co-dopée avec un oxyde d'hafnium et un oxyde d'yttrium, le pourcentage molaire total de l'oxyde d'hafnium avec l'oxyde d'yttrium par rapport à la zircone étant compris entre 4 et 8%,
    - une zircone dopée avec un ou plusieurs oxydes choisis parmi un oxyde d'yttrium, un oxyde de cérium, un oxyde de magnésium et un oxyde de calcium, et renforcée avec une alumine, le pourcentage en poids de l'alumine par rapport à la zircone dopée étant compris entre 8 et 18%,
    - des pigments avec un pourcentage en poids compris entre 2.5% et 20% par rapport au poids total de la céramique, lesdits pigments comprenant un ou plusieurs oxydes choisis parmi la liste constituée des oxydes de Al, Si, Fe, Cu, Co, Ni, Mn, Zn, Cr, Ti, Ce, V, Pr et Nd incluant des oxydes mixtes de cette liste,
    - des impuretés éventuelles comprises entre 0 et 0.2%,

    le pourcentage total en poids de la zircone haute performance, des pigments et des impuretés éventuelles étant de 100%, ladite céramique ayant une dureté HV30 supérieure à 1100 HV et une ténacité supérieure à 12 MPa√m et que l'article ayant dans l'espace colorimétrique CIELAB une composante L* supérieure à 40, de préférence à 45.

2.  Article selon la revendication 1, **caractérisé en ce que** le pourcentage en poids de pigments est compris entre 2.5% et 20%, de préférence entre 3% et 12%, plus préférentiellement entre 3.5% et 11%.

3.  Article selon l'une des revendications précédentes, **caractérisé en ce que** l'article a une couleur noire ou bleue et **en ce que** les pigments comprennent un ou plusieurs oxydes choisis parmi la liste constituée des oxydes de Al, Fe, Co, Cr, Ni et Mn incluant les oxydes mixtes de cette liste avec un pourcentage total en poids compris entre 3 et 7%.

4.  Article selon la revendication précédente, **caractérisé en ce que** l'article a une couleur noire et **en ce que** les pigments sont constitués des oxydes de Co, Fe et Cr incluant les oxydes mixtes de Co, Fe et Cr avec un pourcentage total de pigments compris entre 3% et 6%, de préférence entre 3% et 5%, plus préférentiellement entre 3.5% et 4.5%.

5.  Article selon la revendication précédente, **caractérisé en ce que** la zircone haute performance est la zircone dopée avec l'oxyde d'yttrium.

6.  Article selon la revendication 4 ou 5, **caractérisé en ce que** l'article a dans l'espace colorimétrique CIELAB une composante L* supérieure à 40.

7.  Article selon la revendication 3, **caractérisé en ce que** l'article a une couleur bleue et **en ce que** les pigments sont constitués des oxydes de Co et Al incluant les oxydes mixtes de Co et Al avec un pourcentage total de pigments compris entre 3% et 7%, de préférence entre 3% et 6%, plus préférentiellement entre 3.5% et 5.5%.

8.  Article selon la revendication précédente, **caractérisé en ce que** la zircone haute performance est la zircone dopée avec un ou plusieurs oxydes choisis parmi l'oxyde d'yttrium, l'oxyde de cérium, l'oxyde de magnésium et l'oxyde de calcium et renforcée avec l'alumine ou la zircone co-dopée avec l'oxyde d'hafnium et l'oxyde d'yttrium.

9.  Article selon la revendication 1 ou 2, **caractérisé en ce que** l'article a une couleur blanche et **en ce que** les pigments comprennent des oxydes d'Al et/ou de Ti incluant les oxydes mixtes d'Al et Ti avec un pourcentage total en poids compris entre 5 et 20%.

10. Article selon la revendication précédente, **caractérisé en ce que** les pigments sont constitués d'oxydes d'Al avec un pourcentage compris entre 6% et 14%, de préférence entre 8% et 12%, plus préférentiellement entre 9% et 11%.

11. Article selon la revendication 9 ou 10, **caractérisé en ce que** la zircone haute performance est la zircone dopée avec l'oxyde d'yttrium.

**12.** Article selon l'une des revendications 9 à 11, **caractérisé en ce que** l'article a dans l'espace colorimétrique CIELAB une composante L* supérieure à 90.

**13.** Article selon l'une des revendications précédentes, **caractérisé en ce qu'**il s'agit d'un composant d'habillage ou du mouvement en horlogerie.

**14.** Article selon l'une des revendications précédentes, **caractérisé en ce qu'**il s'agit d'un cadran (1).

**15.** Procédé de fabrication d'un article selon l'une des revendications précédentes, comprenant les étapes suivantes :

- Etape a) : Réalisation d'un mélange de base, aussi appelé premier mélange, avec la zircone haute performance et les pigments dans les teneurs selon l'une des revendications 1 à 5, 7 à 8 et 9 à 11, et ce éventuellement en milieu liquide,
- Etape b) optionnelle : Réalisation d'un deuxième mélange comprenant le premier mélange et un système de liant organique,
- Etape c) si il y a une étape b) : Granulation dudit deuxième mélange,
- Etape d) : Formation d'une ébauche ayant la forme de l'article,
- Etape e) : Déliantage de l'ébauche,
- Etape f) : Frittage de l'ébauche, de préférence sous air, à une température de maintien comprise entre 1200°C et 1600°C, de préférence entre 1250°C et 1450°C, pendant une période comprise entre 20 minutes et 20 heures, de préférence entre 1 heure et 3 heures.

**16.** Procédé selon la revendication précédente, **caractérisé en ce que** le frittage est suivi d'un traitement thermique sous vide ou sous atmosphère contrôlée à une température comprise entre 900°C et 1200°C avec un palier compris entre 20 minutes et 6 heures.

# Fig. 1

Europäisches
Patentamt

European
Patent Office

Office européen
des brevets

# RAPPORT DE RECHERCHE EUROPEENNE

Numéro de la demande

EP 24 15 2103

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 114 075 072 A (DAIICHI KIGENSO KAGAKU KOGYO) 22 février 2022 (2022-02-22) * exemples 1-3, 6, 8; tableau 1 * | 1-16 | INV.<br>C04B35/48<br>C04B35/486<br>C04B35/488 |
| X | CN 104 961 461 A (NANCHONG THREE CIRCLE ELECTRONICS CO LTD ET AL.) 7 octobre 2015 (2015-10-07) * exemples 1, 2; tableau 1 * | 1-16 | C04B35/638<br>C04B35/64 |
| X | JP 2004 059374 A (MATSUSHITA ELECTRIC WORKS LTD; KRI INC ET AL.) 26 février 2004 (2004-02-26) * alinéa [0097]; tableaux 1-3 * | 1-16 | |
| X | WO 2018/050925 A1 (SAINT GOBAIN CT RECHERCHES [FR]) 22 mars 2018 (2018-03-22) * tableaux 1-3 * | 1-16 | |
| A | FR 2 969 601 A1 (SAINT GOBAIN CT RECHERCHES [FR]) 29 juin 2012 (2012-06-29) * exemple 13; tableaux 3-5 * | 1-16 | DOMAINES TECHNIQUES RECHERCHES (IPC) |
| A | US 2022/332649 A1 (KAWAMURA KENTA [JP] ET AL) 20 octobre 2022 (2022-10-20) * alinéa [0212]; exemples; tableaux * | 1-16 | C04B |
| A | EP 4 074 674 A1 (TOSOH CORP [JP]) 19 octobre 2022 (2022-10-19) * alinéa [0065]; exemples; tableaux * | 1-16 | |
| A | US 2010/240519 A1 (NAKASUGA MINORU [JP] ET AL) 23 septembre 2010 (2010-09-23) * alinéa [0053]; exemples 14, 15; tableau 3 * | 1-16 | |

Le présent rapport a été établi pour toutes les revendications

| Lieu de la recherche | Date d'achèvement de la recherche | Examinateur |
|---|---|---|
| Munich | 25 juin 2024 | Munro, Brian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 15 2103

25-06-2024

| Document brevet cité au rapport de recherche | | Date de publication | Membre(s) de la famille de brevet(s) | | Date de publication |
|---|---|---|---|---|---|
| CN 114075072 | A | 22-02-2022 | CN | 114075072 A | 22-02-2022 |
| | | | JP | 2022034289 A | 03-03-2022 |
| CN 104961461 | A | 07-10-2015 | AUCUN | | |
| JP 2004059374 | A | 26-02-2004 | JP | 4196608 B2 | 17-12-2008 |
| | | | JP | 2004059374 A | 26-02-2004 |
| WO 2018050925 | A1 | 22-03-2018 | FR | 3056208 A1 | 23-03-2018 |
| | | | WO | 2018050925 A1 | 22-03-2018 |
| FR 2969601 | A1 | 29-06-2012 | CN | 103384652 A | 06-11-2013 |
| | | | EP | 2655291 A2 | 30-10-2013 |
| | | | EP | 2740717 A2 | 11-06-2014 |
| | | | FR | 2969601 A1 | 29-06-2012 |
| | | | JP | 5718481 B2 | 13-05-2015 |
| | | | JP | 2014501692 A | 23-01-2014 |
| | | | KR | 20130093173 A | 21-08-2013 |
| | | | US | 2013284065 A1 | 31-10-2013 |
| | | | WO | 2012085875 A2 | 28-06-2012 |
| US 2022332649 | A1 | 20-10-2022 | CN | 115196962 A | 18-10-2022 |
| | | | EP | 4074673 A1 | 19-10-2022 |
| | | | JP | 2022162546 A | 24-10-2022 |
| | | | KR | 20220141250 A | 19-10-2022 |
| | | | US | 2022332649 A1 | 20-10-2022 |
| EP 4074674 | A1 | 19-10-2022 | CN | 114787103 A | 22-07-2022 |
| | | | EP | 4074674 A1 | 19-10-2022 |
| | | | KR | 20220110750 A | 09-08-2022 |
| | | | US | 2023014792 A1 | 19-01-2023 |
| | | | WO | 2021117720 A1 | 17-06-2021 |
| US 2010240519 | A1 | 23-09-2010 | CH | 700119 B1 | 30-06-2010 |
| | | | JP | WO2007108416 A1 | 06-08-2009 |
| | | | US | 2010240519 A1 | 23-09-2010 |
| | | | WO | 2007108416 A1 | 27-09-2007 |

EPO FORM P0460